# EUROPÄISCHE PATENTANMELDUNG

(11) **EP 4 257 013 A1**
(43) Veröffentlichungstag der Anmeldung: **11.10.2023**
(21) Anmeldenummer: 23187773.9
(22) Anmeldetag: 15.07.2019
(51) Int. Cl.: A47F 5/13, B65D 6/18, B62B 3/18, B62B 3/02

(54) **VERKAUFSTISCH**

(30) Priorität: 06.08.2018 DE 102018119006; 29.11.2018 DE 202018106801 U
(62) Teilanmeldung aus: 19742005.2
(71) Anmelder: Wanzl GmbH & Co. KGaA, 89340 Leipheim (DE)
(72) Erfinder: Rojahn, Kirsten, Leipheim (DE)

(57) **Zusammenfassung**

Verkaufstisch (110) für Waren, wobei der Verkaufstisch (110) zusammenklappbar und fahrbar ausgebildet ist, mit im montierten Zustand parallel zueinander angeordneten Längsseitenwänden (112) und parallel zueinander angeordneten Querseitenwänden (114), wobei die Längsseitenwände (112) und die Querseitenwände (114) jeweils einen Grundrahmen (112a, 114a) aufweisen, in dem jeweils Wandteile (112b, 114b) gehalten sind, wobei an wenigstens zwei Grundrahmen (112a, 114a) Rollen (116, 118) angeordnet sind, wobei je eine Längsseitenwand (112) und je eine an der Längsseitenwand (112) angelenkte Querseitenwand (114) zusammengeklappt werden können, und wobei mittels wenigstens einem bodenseitig angelenkten Strebenelement (126) zwei gegenüberliegende Längsseitenwände (112) oder Querseitenwände (114) miteinander verbunden sind, wobei die Gelenkstangen (126a, 126b) im zusammengeklappten Zustand des Verkaufstisches (110) zumindest teilweise übereinander angeordnet sind, wobei das Strebenelement (126) mehrteilig ausgebildet ist, wobei das Strebenelement (126) wenigstens eine erste Strebe und wenigstens eine zweite Strebe aufweist, wobei das Strebenelement (126) als V-förmige Gelenkanordnung ausgebildet ist, und wobei die V-förmige Gelenkanordnung zumindest zwei Gelenkstangen (126a, 126b) aufweist, die mit einem Zwischengelenk (126c) relativ zueinander verschwenkbar sind, und wobei ferner die Gelenkstangen (126a, 126b) nicht eckseitig an gegenüberliegenden Längsseitenwänden (112) jeweils gelenkig angeordnet sind.

## Beschreibung

Die vorliegende Erfindung betrifft einen zusammenklappbaren und fahrbaren Verkaufstisch für Waren.

Zusammenklappbare und fahrbare Verkaufstische, z.B. zum Einsatz in Selbstbedienungsgeschäften sind in verschiedensten Ausführungsformen bekannt. Allen diesen Tischen ist gemeinsam, dass sie zum Zwecke des Transports, beispielsweise bei ihrer Auslieferung, in eine möglichst platz- und raumsparende Form gebracht werden können. Es sind hierfür verschiedene Lösungen bekannt.

Auch ist es manchmal erforderlich, derartige Verkaufstische zusammenzuklappen, um sie dann, z.B. nach Ablauf einer Sonderverkaufsaktion, wieder zurück ins Lager zu überführen.

Beispielsweise sind derartige Tische aus der EP 1 511 411 B1, der DE 20 2017 001 134 U1, der DE 20 2016 007 017 U1, der EP 1 674 372 B1, der WO 14/206566 A1 oder der DE 20 2014 003 482 U1 bekannt.

Es ist die Aufgabe der vorliegenden Erfindung, einen zusammenklappbaren und fahrbaren Verkaufstisch der eingangs genannten Art in vorteilhafter Weise weiterzubilden, insbesondere dahingehend, dass dieser besonders einfach zusammenklappbar ist und gleichzeitig eine stabile Konstruktion und Funktion gewährleistet werden kann.

Diese Aufgabe wird erfindungsgemäß gelöst durch einen zusammenklappbaren und fahrbaren Verkaufstisch für Waren mit den Merkmalen des Anspruchs 1. Danach ist vorgesehen, dass ein zusammenklappbarer und fahrbarer Verkaufstisch für Waren mit im montierten Zustand parallel zueinander angeordneten Längsseitenwänden und parallel zueinander angeordneten Querseitenwänden derart beschaffen ist, dass die Längsseitenwände und die Querseitenwände jeweils einen Grundrahmen aufweisen, in dem jeweils Wandteile gehalten sind, wobei an wenigstens zwei Grundrahmen Rollen angeordnet sind und wobei je eine Längsseitenwand und je eine an der Längsseitenwand angelenkte Querseitenwand zusammengeklappt werden können, und wobei mittels wenigstens einem gelenkig angeordneten, bodenseitigen Strebenelement zwei gegenüberliegende Längsseitenwände oder Querseitenwände miteinander verbunden sind.

Die Erfindung basiert auf dem Grundgedanken, dass mittels der Zusammenklappbarkeit von je einer Längsseitenwand und einer Querseitenwand und der gelenkigen Verbindung mittels des Strebenelements zunächst je eine Längsseitenwand und eine Querseitenwand eingeklappt und dann mittels des Strebenelements geführt und auf den Rollen gefahren aufeinander zu bewegt werden können, so dass sämtliche Bestandteile des Verkaufstisches im zusammengeklappten Zustand weiterhin miteinander verbunden sind, sich jedoch in einer zusammengeklappten und stabilen Konfiguration befinden.

Insbesondere kann vorgesehen sein, dass das Strebenelement gegenüberliegende Längsseitenwände miteinander verbindet. Hierdurch wird erreicht, dass die Längsseitenwände nur bis zu einem gewissen Grad auseinander geschoben werden können, vorzugsweise nur soweit, bis die montierte Position, die der Aufstellposition und ausgezogenen Position entspricht, erreicht ist. Beim Zusammenschieben wird hierdurch erreicht, dass die entsprechenden Elemente, d.h. die jeweiligen Paare aus einer Längsseitenwand und einer Querseitenwand aufeinander zugeschoben werden können.

Im bodenseitigen Bereich des Grundrahmens kann ein Gabelprofil angeordnet sein, das derart beschaffen und eingerichtet ist, im zusammengeklappten Zustand des Verkaufstisches das Strebenelement zumindest teilweise zu umgreifen. Diese Idee basiert auf dem Grundgedanken, für den zusammengeklappten Zustand des Verkaufstisches eine Einrichtung zu schaffen, in der das Strebenelement gehalten wird, so dass die zueinander grundsätzlich beweglichen Paare aus je einer Längsseitenwand und einer Querseitenwand im zusammengeklappten Zustand festgelegt werden können. Vorzugsweise sind hierzu auch zwei Gabelprofile vorgesehen, so dass das Strebenelement sowohl von der einen als auch von der anderen Seite teilweise umgriffen wird. Durch das teilweise Umgreifen kann eine entsprechende Fixierung im zusammengeklappten Zustand erreicht werden.

Insbesondere ist denkbar, dass das Gabelprofil einen Befestigungssteg und ein U-Profil aufweist. Durch eine derartige Konstruktion kann mit einfachen Metallprofilen oder Profilelementen ein entsprechendes Gabelprofil erreicht werden.

Des Weiteren kann vorgesehen sein, dass das Gabelprofil wenigstens ein Verrastungselement aufweist, in dem das Strebenelement beim Zusammenklappen des Verkaufstisches lösbar verrastbar ist. Durch die Verrastbarkeit des Strebenelements in dem Gabelprofil wird sichergestellt, dass im zusammengeklappten Zustand des Verkaufstisches die zusammengeklappten Wandpaare nicht sich beim Verfahren entsprechend auseinander bewegen können. Hierdurch wird die Handhabbarkeit des zusammengeklappten Verkaufstisches insgesamt verbessert. Die Transportmöglichkeiten und das Transportieren des Verkaufstisches sind so vereinfacht und verbessert.

Darüber hinaus kann vorgesehen sein, dass das Strebenelement an schräg gegenüberliegenden Ecken der Längsseitenwände jeweils gelenkig angeordnet ist. Hierdurch wird eine einfache und definierte Mechanik und Relativbewegung der Wandpaare zueinander ermöglicht. Das Strebenelement verläuft dann auch von einer Ecke zur schräg gegenüberliegenden Ecke, wodurch im aufgebauten Zustand des Verkaufstisches insgesamt die Stabilität des Verkaufstisches verbessert wird. Das Strebenelement verläuft dann vorzugsweise im Endeffekt als Diagonale von einer Ecke zur schräg gegenüberliegenden Ecke im Bodenbereich.

Außerdem ist möglich, dass das Strebenelement wenigstens eine erste Strebe und wenigstens eine zweite Strebe aufweist. Mehrere Streben des Strebenelementes erlauben mehr Möglichkeiten in der Anpassung an die örtlichen Gegebenheiten und Betriebsumstände. Denkbar ist beispielsweise, dass die Streben zumindest teilweise ineinanderschiebbar ausgebildet sind. Möglich ist aber zusätzlich oder auch alternativ, dass die Streben relativ zueinander beweglich geführt und/oder verschwenkbar sind.

Insbesondere ist denkbar, dass das Strebenelement mehrteilig ausgebildet ist. Als Komponenten des Strebenelements kommen insbesondere Lager, Drehlager, Schiebehülsen, Streben, Stangen, Anlenkelemente oder dergleichen in Betracht.

Darüber hinaus kann vorgesehen sein, dass das Strebenelement als V-förmige Gelenkanordnung ausgebildet ist. Bei einer V-förmigen Gelenkanordnung weist das Strebenelement zwei Gelenkstangen auf, die in einer V-Form angeordnet sind.

Insbesondere kann vorgesehen sein, dass die V-förmige Gelenkanordnung zumindest zwei Gelenkstangen aufweist, die mit einem Zwischengelenk relativ zueinander verschwenkbar sind. Hierdurch kann ein verbessertes Zusammenlegen der Wandpaare aus je einer Querseitenwand und einer Längsseitenwand erreicht werden. Denn bei lediglich einer Diagonalstrebe ist stets mit einem gewissen Versatz der Wandpaare zueinander im zusammengeklappten Zustand zu rechnen. Dies ist jedoch nicht mehr der Fall, wenn zwei Gelenkstangen ein direktes Zusammenlegen oder Aufeinanderlegen der Wandpaare ermöglichen.

Vorzugsweise sind die Gelenkstangen an direkt gegenüberliegenden Ecken der Längsseitenwände jeweils gelenkig angeordnet. Die Anlenkung der beiden Gelenkstangen zueinander erfolgt dann vorzugsweise in einem Bereich, der sich mehr entfernt von diesen Ecken befindet, beispielsweise benachbart oder in der Nähe der von diesen Ecken abgewandten Querseitenwand.

Denkbar ist auch, dass beispielsweise zwei V-förmige Gelenkanordnungen als Strebenelemente vorgesehen sind. Denkbar ist in diesem Zusammenhang, dass zwei Strebenelemente vorgesehen sind, so dass ziehharmonikaartig ein Zusammenlegen des Verkaufstisches ermöglicht wird.

Außerdem kann vorgesehen sein, dass die Gelenkstangen im zusammengeklappten Zustand zumindest teilweise in der jeweiligen Längsseitenwand versenkbar bzw. versenkt sind. Hierdurch wird insgesamt auch die Stapelbreite bzw. im zusammengelegten Zustand der Platzbedarf des Verkaufstisches verringert, was insbesondere bei geringer Lagerfläche von großem Vorteil ist.

Die Gelenkstangen können auch nicht eckseitig an gegenüberliegenden Längsseitenwänden jeweils gelenkig angeordnet sein. Insbesondere ist dabei denkbar, dass die Anlenkung der Gelenkstangen nicht in den Ecken des Verkaufstisches, sondern von den Ecken entfernt erfolgt. Hierdurch lässt sich eine alternative Falt-Kinematik für den Verkaufstisch realisieren.

Wenigstens eine der Gelenkstangen kann mittig an einer der Längsseitenwände gelenkig angeordnet sein.

Denkbar ist auch, dass eine der Gelenkstangen am Grundrahmen oder einem Wandteil oder an einer senkrechten/vertikalen Säule des Grundrahmens angeordnet ist.

Die Gelenkstangen können an den Querseitenwänden jeweils gelenkig angeordnet sein. Denkbar ist insbesondere, dass die Gelenkstangen an direkt gegenüberliegenden Ecken der Querseitenwände jeweils gelenkig angeordnet sind.

Die Gelenkstangen können die gleiche Länge aufweisen.

Des Weiteren kann vorgesehen sein, dass die Gelenkstangen zumindest teilweise aus Halbzeugen, insbesondere aus einem Vierkantrohr oder einem Rechteckrohr oder einem Rundrohr ausgebildet sind.

Die Gelenkstangen können im aufgestellten und montierten Zustand des Verkaufstisches einen mechanischen Nullstab darstellen. Dies bedeutet insbesondere, dass die Gelenkstangen in diesem Zustand (theoretisch) keine Kräfte aufnehmen und unbelastet sind, weil die gesamte Statik des Verkaufstisches an sich ohne die Gelenkstangen auskommen könnte. Mit anderen Worten würde der Verkaufstisch auch ohne die Gelenkstangen sicher stehen. Die Gelenkstangen dienen somit nur als Führungshilfe beim Vorgang des Zusammenklappens bzw. Auseinanderklappens.

Die Gelenkstangen können im zusammengeklappten Zustand des Verkaufstisches übereinander angeordnet sein.

Denkbar ist aber auch, dass die Gelenkstangen im zusammengeklappten Zustand des Verkaufstisches übereinander im Gabelprofil angeordnet und gesichert sind.

Außerdem ist möglich, dass die Gelenkstangen im zusammengeklappten Zustand des Verkaufstisches nebeneinander angeordnet sind.

Denkbar ist des Weiteren, dass die Gelenkstangen im zusammengeklappten Zustand des Verkaufstisches nebeneinander im Gabelprofil angeordnet und gesichert sind.

Insbesondere können wenigstens zwei Gabelprofile vorgesehen sein. Hierdurch kann eine bessere Stabilisierung der Strebenelemente bzw. der Gelenkstangen erreicht werden. Auch eine bessere Stabilisierung der Längsseitenwände bzw. der Querseitenwände kann hierdurch erreicht werden.

Die wenigstens zwei Gabelprofile können jeweils versetzt zueinander angeordnet sein. Hierdurch kann ebenfalls die Stabilisierungswirkung erhöht werden.

Die wenigstens zwei Gabelprofile können auf derselben Höhe bezogen auf die Position am Grundrahmen und/oder einer Längsseitenwand und/oder einer Querseitenwand versetzt zueinander angeordnet sein.

Des Weiteren kann vorgesehen sein, dass die wenigstens zwei Gabelprofile jeweils in unterschiedlichen Höhen versetzt zueinander angeordnet sind.

Weitere Einzelheiten und Vorteile der Erfindung sollen nun anhand eines in den Zeichnungen näher gezeigten Ausführungsbeispiels erläutert werden.

Es zeigen:
- Fig. 1: eine Draufsicht auf ein Ausführungsbeispiel eines erfindungsgemäßen Verkaufstisches im aufgebauten, ausgeklappten Zustand;
- Fig. 2: eine Draufsicht auf den Verkaufstisch gemäß Fig. 1 im zusammengeklappten Zustand;
- Fig. 3: eine Seitenansicht auf den Verkaufstisch im zusammengeklappten Zustand gemäß Fig. 2;
- Fig. 4: eine perspektivische Ansicht auf den Verkaufstisch gemäß Fig. 3 und
- Fig. 5: eine Draufsicht auf eine alternative Ausführungsform eines Verkaufstischs, vergleichbar wie in Fig. 1 dargestellt;
- Fig. 6a, b: jeweils eine Draufsicht einer weiteren Ausführungsform eines Verkaufstischs;
- Fig. 6c: eine perspektivische Ansicht des Verkaufstischs gemäß Fig. 6 a,b und
- Fig. 6d: eine Detaildarstellung einer Anordnung einer Gelenkstrebe;
- Fig. 7: eine Draufsicht des Verkaufstischs aus Fig. 6a bis d im zusammengeklappten Zustand;
- Fig. 8a: eine perspektivische Darstellung des Verkaufstischs aus Fig. 6a bis d im aufgebauten Zustand;
- Fig. 8b: eine perspektivische Detaildarstellung einer mittleren Wand des Verkaufstischs aus Fig. 6a bis d im aufgebauten Zustand;
- Fig. 9a: eine perspektivische Darstellung des Verkaufstischs aus Fig. 6a bis d während der Aufbaus, sowie
- Fig. 9b: eine perspektivische Detaildarstellung zur Anordnung der Querseitenwand an dem benachbarten Grundrahmen des Verkaufstischs aus Fig. 6a bis d im aufgebauten Zustand.

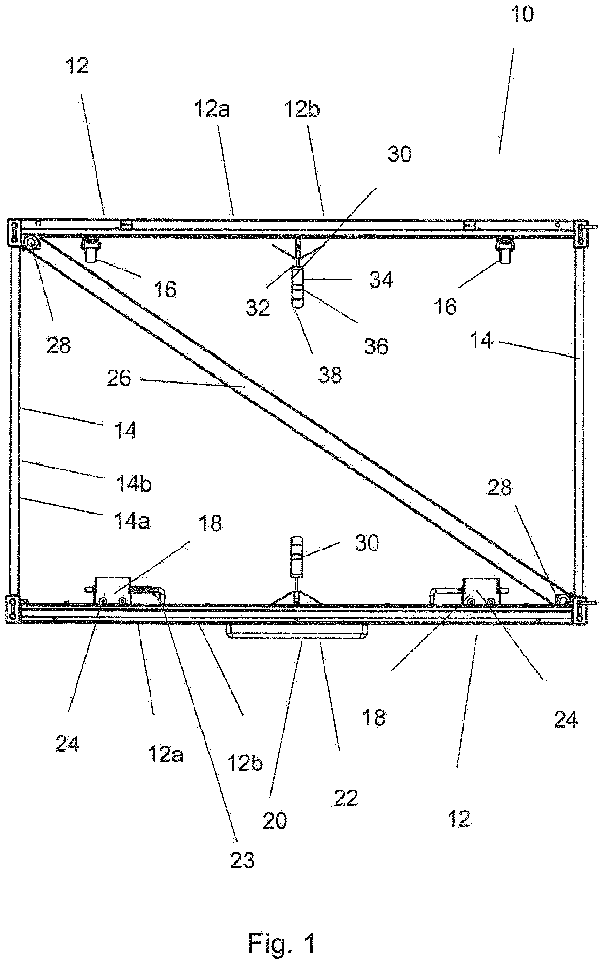

**Fig. 1** zeigt in einer Draufsicht im ausgeklappten Zustand ein erfindungsgemäßes Ausführungsbeispiel eines Verkaufstisches 10 für Waren im montierten Zustand.

Der Verkaufstisch 10 ist dabei zusammenklappbar und fahrbar ausgebildet.

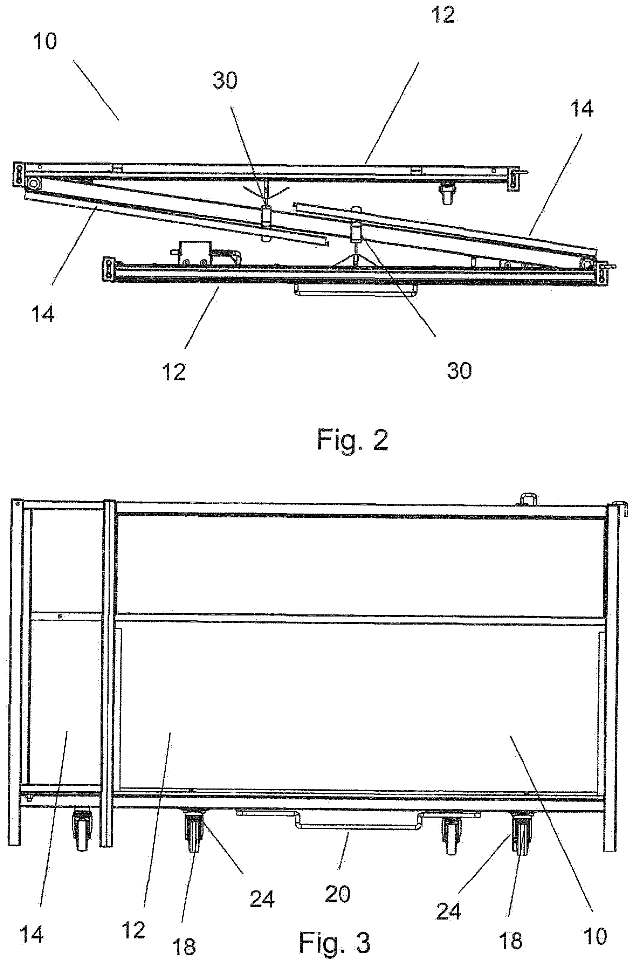

Der zusammengeklappte Zustand des Verkaufstisches ist in **Fig. 2, Fig. 3** und **Fig. 4** gezeigt.

Fig. 2 zeigt dabei eine Draufsicht auf den Verkaufstisch 10 im zusammengeklappten Zustand.

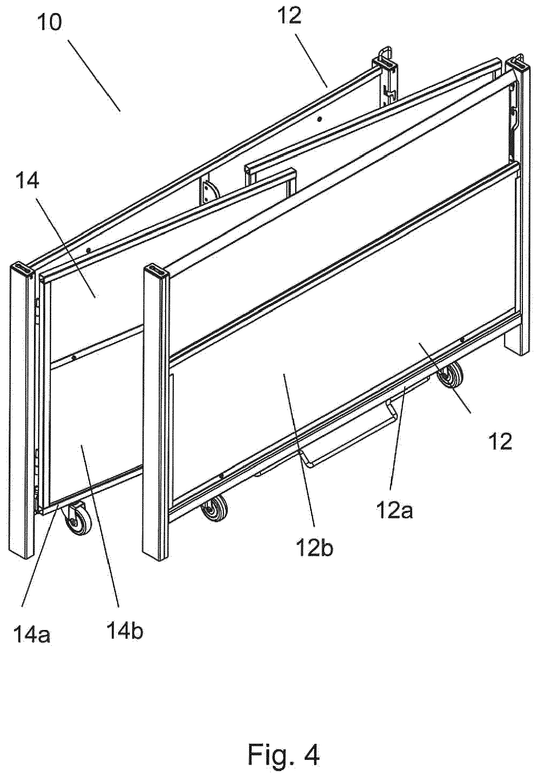

Fig. 3 zeigt eine Seitenansicht und Fig. 4 eine perspektivische Seitenansicht auf den Verkaufstisch 10 im zusammengeklappten Zustand.

Im montierten Zustand, wie in Fig. 1 gezeigt, weist der Verkaufstisch 10 zwei parallel zueinander angeordnete Längsseitenwände 12 und zwei parallel zueinander angeordnete Querseitenwände 14 auf.

Wie dies beispielsweise weiter in Fig. 3 oder 4 ersichtlich ist, sind die Längsseitenwände 12 und die Querseitenwände 14 jeweils mit einem Grundrahmen 12a bzw. 14a versehen.

In dem Grundrahmen 12a bzw. 14a sind jeweils Wandteile 12b bzw. 14b gehalten.

Der Grundrahmen 12a bzw. 14a kann als vertikale Elemente eine oder mehrere Säule(n) oder Schlitzsäule(n) aufweisen, die mit einer oder mehreren horizontalen Stange(n) oder Strebe(n) dann den Grundrahmen ausbilden.

Bei den Wandteilen 12b bzw. 14b kann es sich beispielsweise um Holzplatten oder aber auch Metallgitter oder dergleichen handeln. Als Wandteile können insbesondere Drahtwände oder Gitterwände, aber auch flächige Einsätze (z.B. aus Kunststoff oder aus Holz) eingesetzt werden.

Wie dies weiter aus Fig. 1 oder auch Fig. 3 oder Fig. 4 ersichtlich ist, ist im bodenseitigen Bereich des Grundrahmens 12a der Längsseitenwände 12 jeweils endseitig eine ungebremste Rolle 16 vorgesehen.

Die Rollen 16 sind dabei drehbar ausgebildet. Des Weiteren sind gebremste Rollen 18 vorgesehen. Die gebremsten Rollen 18 sind ebenfalls drehbar ausgebildet. Darüber hinaus ist eine Bremse 20 vorgesehen.

Die Bremse 20 weist dabei einen Trittbügel 22 auf, der mittels einer Hebelanordnung 23 die Bremselemente 24 entsprechend gegen die Rollen 18 bremsend anstellen kann (vgl. hierzu Fig. 1 sowie Fig. 3 und Fig. 4).

Darüber hinaus weist der Verkaufstisch 10 ein an beiden Endseiten angelenktes, bodenseitiges Strebenelement 26 auf, das die beiden gegenüberliegenden Längsseitenwände 12 in ihrem bodenseitigen Bereich des Grundrahmens 12a miteinander verbindet. Hierzu ist jeweils endseitig des Strebenelements 26 ein Gelenklager 28 vorgesehen.

Außerdem ist im bodenseitigen Bereich der Grundrahmen 12a der Längsseitenwände 12 jeweils ein Gabelprofil 30 vorgesehen. Es sind also zwei Gabelprofile 30 vorgesehen. Die Gabelprofile 30 sind dabei versetzt zueinander angeordnet. Die zwei Gabelprofile 30 sind dabei auf derselben Höhe bezogen auf die Position am Grundrahmen 12a angeordnet. Außerdem sind die zwei Gabelprofile 30 bezogen auf ihre Position an der jeweiligen Längsseitenwand 12 versetzt zueinander angeordnet. Das Gabelprofil 30 weist dabei einen Befestigungssteg 32 und ein U-Profil 34 auf. Außerdem ist in den Gabelprofilen 30 jeweils ein Verrastungselement 36 angeordnet.

Des Weiteren weist ein Ende des U-Profils 34 einen gesonderten Haltesteg 38 auf.

Wie dies insbesondere aus Fig. 1 ersichtlich ist, ist das Strebenelement 26 an den schräg gegenüberliegenden Ecken der Längsseitenwände 12 jeweils gelenkig angeordnet, d.h. mit einem Gelenk dort befestigt.

Die Funktion lässt sich wie folgt beschreiben:

Beim Einklappen der Querseitenwände 14 in Richtung der zugehörigen Längsseitenwand 12 wird es möglich, die beiden Längsseitenwände 12 aufeinander zuzubewegen, und zwar so lange bis das Strebenelement 26 in die Gabelelemente 30 eingefahren und dort verrastet ist. Dieser Zustand ist in Fig. 2 gezeigt.

Die Gabelprofile 30 dienen hierzu auch zur Verrastung der Querseitenwände 14 und weisen hierzu den gesonderten Haltesteg 38 auf, auf den die jeweilige Querseitenwand 14 dort verrastend aufgeschoben werden kann.

Über die Bremse 20 kann der Verkaufstisch 10 gegen Wegrollen gesichert werden. Durch Treten des Trittbügels 22 werden die Bremselemente 24 gegen die Rollen 18 gedrückt und hierdurch die Rollen 18 blockiert. Durch erneutes Treten bzw. Drücken des Trittbügels 22 kann die Bremse 20 wieder gelöst werden, da hierdurch die Bremselemente 24 entsprechend gelöst und wieder zurückgestellt werden.

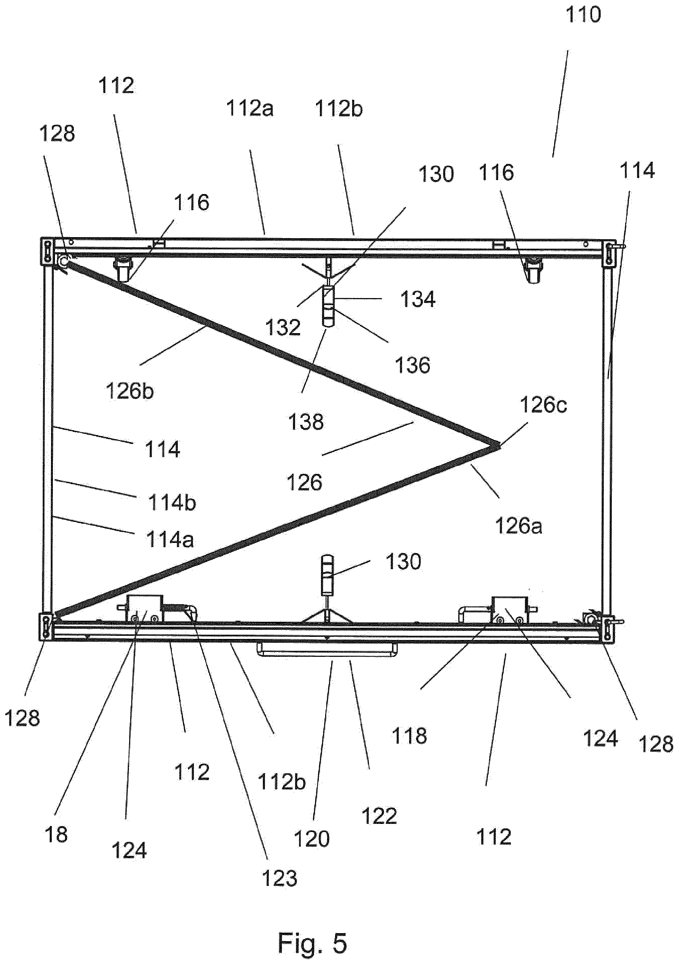

**Fig. 5** zeigt ein weiteres Ausführungsbeispiel eines erfindungsgemäßen Verkaufstisches 110.

Dabei sind sämtliche strukturellen und funktionellen Merkmale ebenso vorhanden, wie dies auch bei dem Verkaufstisch 10 gemäß Fig. 1 bis Fig. 4 der Fall ist.

Identische oder vergleichbare Merkmale sind mit einem um den Wert 100 erhöhten Bezugszeichen entsprechend gekennzeichnet.

Anstelle des Strebenelements 26 gemäß Fig. 1, das dort lediglich eine Diagonalstange ist, ist bei dem in Fig. 5 gezeigten Ausführungsbeispiel ein V-förmiges Strebenelement 126 mit einer V-förmigen Gelenkanordnung mit einer ersten Gelenkstange 126a, einer zweiten Gelenkstange 126b und einem Gelenk 126c vorgesehen.

Die Gelenkstangen 126a sind hier an direkt gegenüberliegenden Ecken der Längsseitenwände 112 jeweils mittels der Gelenklager 128 angelenkt.

Außerdem weisen die Gelenkstangen 126a die identische Länge auf.

Die Gelenkstangen 126a sind im gezeigten Ausführungsbeispiels aus Halbzeugen, hier aus einem Vierkantrohr hergestellt. Grundsätzlich ist auch denkbar, dass die Gelenkstangen aus einem Rechteckrohr oder einem Rundrohr oder dergleichen ausgebildet sind.

Die Gelenkstangen 126a stellen im aufgestellten und montierten Zustand des Verkaufstisches 110 - wie in Fig. 5 gezeigt - einen mechanischen Nullstab dar. Dies bedeutet insbesondere, dass die Gelenkstangen 126a in diesem Zustand (theoretisch) keine Kräfte von den Längsseitenwänden 112 und auch von den Querseitenwänden 114 aufnehmen und unbelastet sind, weil die gesamte Statik des Verkaufstisches 110 an sich ohne die Gelenkstangen 126a auskommen könnte. Mit anderen Worten würde der Verkaufstisch 110 auch ohne die Gelenkstangen sicher stehen, weil dies über die Grundrahmen 112a und 114a der Längsseitenwände 112 und der Querseitenwände 114 gewährleistet wird. Die Gelenkstangen 126a dienen somit nur als Führungshilfe beim Vorgang des Zusammenklappens bzw. Auseinanderklappens von den Längsseitenwänden 112 und den Querseitenwänden 114.

Hier erfolgt die Anlenkung der freiliegenden Enden des Strebenelements 126 an den direkt gegenüberliegenden Ecken der Längsseitenwände 112, während die Spitze des V das Gelenk 126c aufweist und nicht an einem der Grundrahmen befestigt ist.

Grundsätzlich ist es denkbar, dass die in Fig. 5 gezeigte Ausführungsform des Verkaufstisches 110 alternativ ausgestaltet, d.h. mit den nachstehenden Modifikationen ausgebildet wird. Die nachstehend stichpunktartig aufgeführten Kombinationen können allein oder in Kombination realisiert sein:
- Die Gelenkstangen 126a, 126b können im zusammengeklappten Zustand zumindest teilweise in der jeweiligen Längsseitenwand 112 versenkbar ausgebildet sein. Hierzu können in der Längsseitenwand 112 entsprechende Ausnehmungen vorgesehen sein. Dies ist bei der in Fig. 5 gezeigten Ausführungsform nicht der Fall, da hier die Aufnahme in den bzw. durch die Gabelprofile 130 erfolgt.
- Die Gelenkstangen 126a, 126b können nicht eckseitig an gegenüberliegenden Längsseitenwänden 112 jeweils gelenkig angeordnet sind. Hier wird also die Anlenkung der Gelenkstangen 126a, 126b nicht, wie beispielsweise in Fig. 5 gezeigt, in den Ecken realisiert, sondern mehr in Richtung Mitte der Längsseitenwände 112 oder entfernt von den Ecken.
- Wenigstens eine der Gelenkstangen 126a, 126b kann mittig an einer der Längsseitenwände 112 gelenkig angeordnet ist. In diesem Zusammenhang ist weiter denkbar, dass die mittig angelenkte (und dementsprechend dann ggf. auch kürzer als die weitere Gelenkstange ausgebildete) Gelenkstange dann linear z.B. im Grundrahmen oder entlang der zugehörigen Längsseitenwand 112 geführt ist.
- Die Gelenkstangen 126a, 126b können an den Querseitenwänden 114 jeweils gelenkig angeordnet sein.
- Grundsätzlich denkbar ist auch, dass sämtliche vorstehend beschriebenen Ausführungsformen, bei denen die Anlenkung der Gelenkstangen 126a, 126b (aber auch generell der Strebenelemente 126) an oder im Bereich der Längsseitenwände 112 erfolgt, alternativ auch dergestalt ausgebildet sein können, dass diese Anlenkung an oder im Bereich der Querseitenwände 114 erfolgt.
- Die Gelenkstangen 126a, 126b können im zusammengeklappten Zustand des Verkaufstisches 110 übereinander angeordnet sein. Dies ist beispielsweise bei Lösungen möglich, bei denen die Gelenkstangen 126a, 126b in den Längsseitenwänden 112 oder Querseitenwänden 114 versenkt werden und/oder bei denen Gabelprofile 130 vorgesehen sind, die zur Aufnahme der Gelenkstangen 126a, 126b dienen sollen.
- Denkbar ist auch, dass die Gelenkstangen 126a, 126b im zusammengeklappten Zustand des Verkaufstisches 110 übereinander im Gabelprofil 130 angeordnet und gesichert sind.
- Des Weiteren ist möglich, dass die Gelenkstangen 126a, 126b im zusammengeklappten Zustand des Verkaufstisches 110 nebeneinander angeordnet sind. Diese Art der Anordnung kann im Zusammenhang mit einer Versenkung in den Seitenwänden oder im Zusammenhang mit Gabelprofilen 130 realisiert werden.
- Die Gelenkstangen 126a, 126b können im zusammengeklappten Zustand des Verkaufstisches 110 nebeneinander im Gabelprofil 130 angeordnet und gesichert sein.
- Grundsätzlich denkbar ist auch, dass die wenigstens zwei Gabelprofile 130 jeweils in unterschiedlichen Höhen versetzt zueinander angeordnet sind.

Darüber hinaus ist denkbar, dass die Gelenkstangen 126a, 126b in einer weiterführenden Ausführung unterschiedliche Längen aufweisen. Ferner kann bei dieser Version eine der beiden Gelenkstange gerade ausgeführt sein und die andere eine Einbuchtung aufweisen.

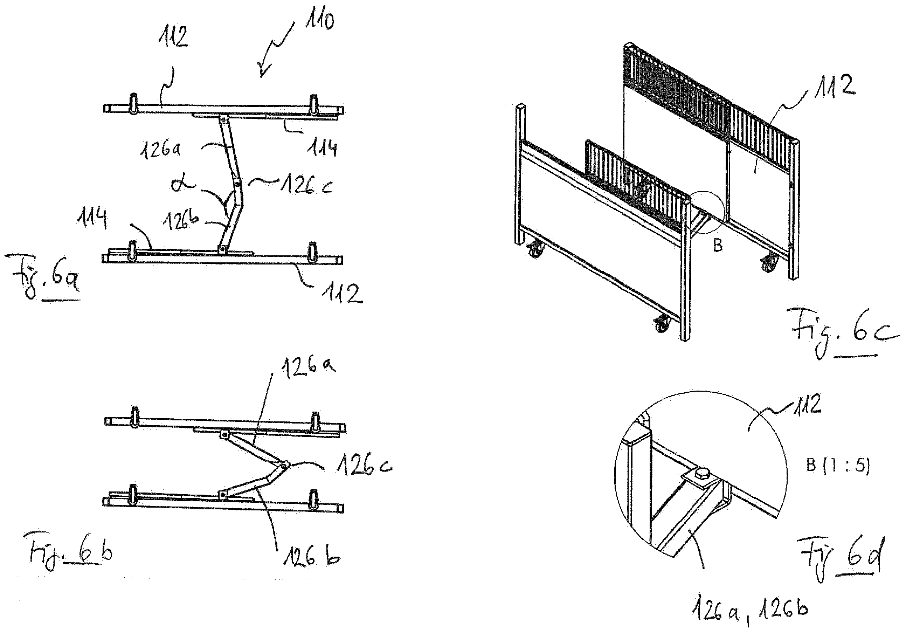

Die **Figuren 6a** **bis d** zeigen beispielhaft eine solche Ausführung. In Fig. 6a ist der Verkaufstisch 110 in Draufsicht im aufgebauten, ausgeklappten Zustand dargestellt. Die Querseitenwände 114 liegen an den Innenseiten der Längsseitenwände 112. Die erste Gelenkstange 126a und die zweite Gelenkstange 126b sind über ein Gelenk 126c miteinander verbunden. Es ist eine V-förmige Gelenkanordnung realisiert, die zwei Gelenkstangen 126a, 126b aufweist. Beide Gelenkstangen sind mit einem Zwischengelenk 126c relativ zueinander verschwenkbar. Die Gelenkstangen 126 a, 126b sind gelenkig und mittig an der Längsseitenwand 112 angeordnet. Fig. 6d zeigt hierbei eine Art der Anordnung, die sich als sinnvoll erwiesen hat.

**Fig. 6b** verdeutlicht die V-förmige Gelenkanordnung mit dem Gelenk 126c. Die zweite Gelenkstange 126b weist eine Einbuchtung auf. Für die Einbuchtung ist ein Winkelbereich α von < 180° und ca. 140° angedacht. Der Winkel ist abhängig von der Größe des Verkaufstischs 110. Bei einer bevorzugten Tischgröße von 1200 mm auf 800 mm findet vorzugsweise ein Winkelbereich von ca. 140° und 150° Anwendung.

Insbesondere der Einsatz von Vierkantrohren ist bei dieser weiterführenden Version von Vorteil.

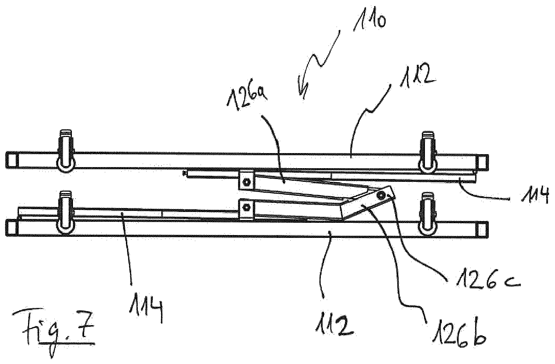

Das Zwischengelenk 126c kann an unterschiedlicher Stelle angeordnet sein. Wie in Fig. 6a dargestellt, ist die erste Gelenkstange 126a kürzer ausgeführt als die Gelenkstange 126b. Vorliegend sind die Gelenkstangen 126a, 126b aus Vierkantrohr ausgeführt. Es hat sich als sinnvoll erwiesen, ein Zwischenteil zwischen beiden Gelenkstangen 126a, 126b mit einem kleineren Querschnitt als Verbindungsteil einzubringen. Das eigentliche Gelenk 126c ist an der Gelenkstange 126b angeordnet. Die Gelenkstange 126a weist an dem Ende, das dem Gelenk 126c zugerichtet ist, eine schräge Abkantung auf. Diese ermöglicht, wie in **Fig. 7** dargestellt, eine verbesserte und Platz sparendere Aufbewahrung, wenn ein Verkaufstisch 110 zusammengeklappt ist. Vorzugsweise ist das Zwischenteil ortsfest an der ersten Gelenkstange 126a angeordnet. Im Bereich der Abschrägung kann dies z.B. in einfacher und dauerhafter Weise mittels einer Schweißverbindung erfolgen. Das Zwischenteil weist eine Länge auf, die ermöglicht, dass das Gelenk 126c die zweite Gelenkstange 126b und das Zwischenstück verbindet.

Als Gelenk 126c bietet sich ein kostengünstiges Sicherungsmittel wie z.B. eine Schraube mit Unterlegscheibe an, die durch eine Mutter gesichert ist. Zwischenteil und zweite Gelenkstange 126b weisen zur Aufnahme einer solchen Schraube entsprechende Öffnungen / Bohrlöcher auf.

Die Gelenkstangen 126a, 126b nehmen im aufgestellten und montierten Zustand des Verkaufstisches 110, wie bereits eingangs beschrieben, keine Kräfte auf.

Das Anordnen der Gelenkstangen 126a, 126b an den Längsseitenwänden 112 des Verkaufstischs 110 ermöglicht ein Platz sparendes Zusammenklappen des Verkaufstischs 110. Es hat sich bei dieser Version als vorteilhaft erweisen, dass die beiden Gelenkstangen 126a, 126b in Platz sparender Weise nebeneinander angeordnet sind, wenn der Verkaufstisch 110 zusammengeklappt ist. Dies ist in **Fig. 7** dargestellt.

Der Einsatz eines Gabelprofils 130 ist in dieser weiterführenden Version nicht mehr notwendig. Die **Figuren 6c** und **6d** zeigen die gelenkige Anordnung der Gelenkstangen 126a, 126b mittig an der Längsseitenwand 112. Die Anordnung ist aus einem einfachen und kostengünstigen U-Profil ausgeführt, das detailliert in Fig. 6d gezeigt ist. Hierbei weisen die Gelenkstangen 126a, 126b die gleiche Art der Anordnung auf.

**Figur 7** zeigt einen zusammengeklappten Tisch 110. Die Querseitenwände 114 sind jeweils an die Innenseite der Längsseitenwände 112 geklappt. Die Anordnung der Gelenkstangen 126a, 126b ist gegenüberliegend ausgeführt. Auch hier bietet sich als gelenkige Anordnung die Verwendung eines Sicherungsmittels z.B. in Form einer Schraube an. Der Kopf der Schraube bietet zusätzlich eine Sicherung der Querseitenwand 114 an der Innenseite der Längsseitenwand 112 in der in Fig. 7 gezeigten, zusammengeklappten Position.

Beide Gelenkstangen 126a, 126b sind nebeneinander angeordnet. Die V-förmige Gelenkanordnung weist einen kleinstmöglichen Winkel auf. Das abgeschrägte Ende der ersten Gelenkstange 126a liegt nahe an dem abgewinkelten Bereich der zweiten Gelenkstange 126b. Die Größe des Querschnitts der Gelenkstangen 126a, 126b kann den Abstand beider Längsseitenwände beeinflussen.

Der Einsatz eines nicht näher dargestellten Stützelementes im Bereich des Zwischengelenks 126c ist denkbar. Die Verwendung zum Beispiel einer Rolle könnte sich für bestimmte Anwendungen als sinnvoll erweisen.

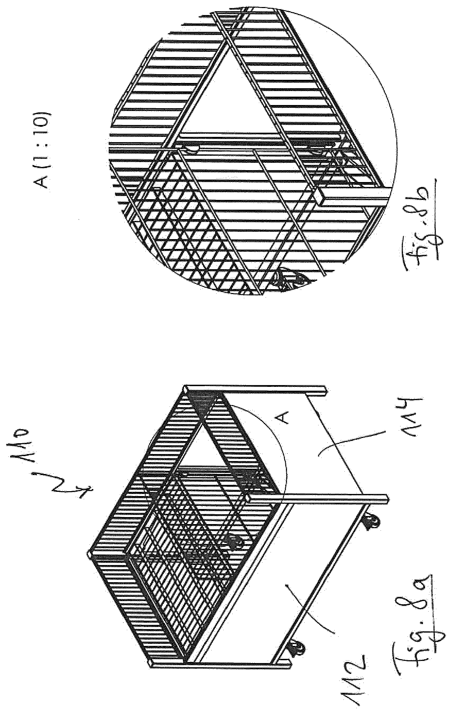

Es hat sich als vorteilhaft erwiesen, dass vorzugsweise zwei Etagenböden an jeweils benachbarten Ecksäulen eingesetzt werden. Hierbei können Etagenböden, die Konsolen aufweisen, in einfacher Art wechselbar und auf unterschiedlichen Höhen angebracht werden. Die Etagenböden bestehen üblicherweise aus Draht, können aber auch aus einem anderen Material gefertigt sein. Eine andere Anzahl an Etagenböden wäre auch denkbar. **Figur 8a** zeigt einen solchen Verkaufstisch 110, bei dem zwei dieser Etagenböden eingesetzt werden können. Eine Etage ist angeordnet. Diese ist durch eine mittlere Seitenwand begrenzt. In **Figur 8b** ist ferner die Aufnahme der mittleren Seitenwand dargestellt. Die mittlere Seitenwand kann auf einfache Art eingeschoben werden. Die Längsseitenwand 112 weist hierfür entsprechende Halterungen auf. Eine Anzahl von zwei hat sich als sinnvoll erwiesen. In einer alternativen Ausführungsform ist eine Schiene vorgesehen, die die mittlere Seitenwand aufnehmen kann.

Die mittlere Seitenwand besteht vorzugsweise aus Draht, sie kann aber auch aus einem anderen Material hergestellt sein.

Um ausreichend Stabilität herzustellen, bietet es sich an, im inneren Bereich der Längsseitenwände 112 und hierbei insbesondere der Wandteile 112b eine Abstützung vorzusehen, die den Abstand zwischen Etagenboden und Innenseite der Längsseitenwand 112 bzw. des Wandteils 112b ausfüllt. Dadurch wird ein Verschwenken der Etage im Inneren unterbunden. Zudem verleiht diese Abstützung dem Verkaufstisch 110 ausreichend Stabilität. Es hat sich als sinnvoll erwiesen, Abstützungen vorzusehen, die aus kleinen Metallschlaufen gebildet sind und ins Innere des Verkaufstischs 110 hineinragen. Die Anzahl dieser Schlaufen ist beliebig. Eine Anzahl an vier bis sechs Schlaufen pro Längsseitenwand 112 bzw. Wandteil 112b hat sich als sinnvoll erwiesen.

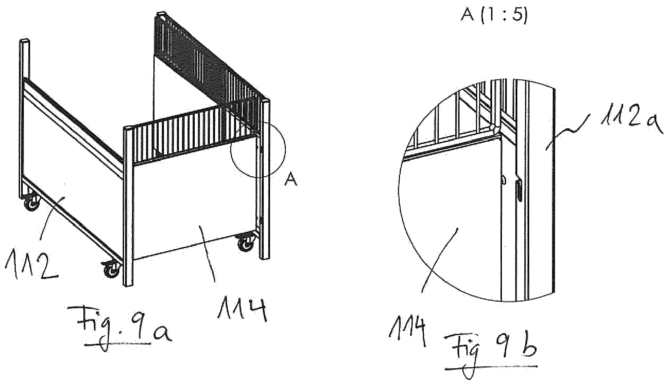

Die Figuren 9a und 9b zeigen eine mögliche Anordnung der Querseitenwand 114 an dem benachbarten Grundrahmen 112a der Längsseitenwand 112. Der Grundrahmen 112a ist aus einem Hohlprofil ausgeführt. Es sind eine oder zwei Öffnung (en) vorgesehen. Ein, vorzugsweise zwei Haken der Querseitenwand 114 kann/können zum Aufbau des Verkaufstisches 110 in diese Öffnung eingebracht werden. Zunächst wird eine Querseitenwand 114 auf diese Art an der benachbarten Längsseitenwand 112 angeordnet, danach wird die zweite Querseitenwand 114 auf die gleiche Art an der benachbarten zweiten Längsseitenwand 112 befestigt.

Der Verkaufstisch 110 kann wie dargestellt vier Rollen aufweisen. Vorzugsweise weisen dann eine oder mehrere Rollen eine Bremsvorrichtung auf. Alternativ kann eine separate Bremsvorrichtung vorgesehen sein.

### Bezugszeichen

- 10, 110: Verkaufstisch
- 12, 112: Längsseitenwände
- 12a, 112a: Grundrahmen
- 12b, 112b: Wandteile
- 14, 114: Querseitenwände
- 14a, 114a: Grundrahmen
- 14b, 114b: Wandteile
- 16, 116: ungebremste Rolle
- 18, 118: gebremste Rolle
- 20, 120: Bremse
- 22, 122: Trittbügel
- 23, 123: Hebelanordnung
- 24, 124: Bremselemente
- 26, 126: Strebenelement
- 28, 128: Gelenklager
- 30, 130: Gabelprofil
- 32, 132: Befestigungssteg
- 34, 134: U-Profil
- 36, 136: Verrastungselement
- 38, 138: Haltesteg
- 126a: erste Gelenkstange
- 126b: zweite Gelenkstange
- 126c: Gelenk, Zwischengelenk

## Patentansprüche

1. Verkaufstisch (110) für Waren, wobei der Verkaufstisch (110) zusammenklappbar und fahrbar ausgebildet ist, mit im montierten Zustand parallel zueinander angeordneten Längsseitenwänden (112) und parallel zueinander angeordneten Querseitenwänden (114), wobei die Längsseitenwände (112) und die Querseitenwände (114) jeweils einen Grundrahmen (112a, 114a) aufweisen, in dem jeweils Wandteile (112b, 114b) gehalten sind, wobei an wenigstens zwei Grundrahmen (112a, 114a) Rollen (116, 118) angeordnet sind, wobei je eine Längsseitenwand (112) und je eine an der Längsseitenwand (112) angelenkte Querseitenwand (114) zusammengeklappt werden können, und wobei mittels wenigstens einem bodenseitig angelenkten Strebenelement (126) zwei gegenüberliegende Längsseitenwände (112) oder Querseitenwände (114) miteinander verbunden sind, wobei die Gelenkstangen (126a, 126b) im zusammengeklappten Zustand des Verkaufstisches (110) zumindest teilweise übereinander angeordnet sind,
wobei das Strebenelement (126) mehrteilig ausgebildet ist,
wobei das Strebenelement (126) wenigstens eine erste Strebe und wenigstens eine zweite Strebe aufweist,
wobei das Strebenelement (126) als V-förmige Gelenkanordnung ausgebildet ist,
und wobei die V-förmige Gelenkanordnung zumindest zwei Gelenkstangen (126a, 126b) aufweist, die mit einem Zwischengelenk (126c) relativ zueinander verschwenkbar sind,
und wobei ferner die Gelenkstangen (126a, 126b) nicht eckseitig an gegenüberliegenden Längsseitenwänden (112) jeweils gelenkig angeordnet sind.

2. Verkaufstisch (110) nach Anspruch 1, **dadurch gekennzeichnet, dass** im bodenseitigen Bereich des Grundrahmens (112a, 114a) ein Gabelprofil (130) angeordnet ist, das derart beschaffen und eingerichtet ist, im zusammengeklappten Zustand des Verkaufstisches (110) das Strebenelement (126) zumindest teilweise zu umgreifen.

3. Verkaufstisch (110) nach Anspruch 2, **dadurch gekennzeichnet, dass** das Gabelprofil (130) einen Befestigungssteg (132) und ein U-Profil (134) aufweist.

4. Verkaufstisch (110) nach Anspruch 2 oder Anspruch 3, **dadurch gekennzeichnet, dass** das Gabelprofil (130) wenigstens ein Verrastungselement (136) aufweist, in dem das Strebenelement (126) beim Zusammenklappen des Verkaufstisches (110) lösbar verrastbar ist.

5. Verkaufstisch (110) nach einem der Ansprüche 1 bis 4, **dadurch gekennzeichnet, dass** die Gelenkstangen (126a, 126b) im zusammengeklappten Zustand zumindest teilweise in der jeweiligen Längsseitenwand (112) versenkbar bzw. versenkt sind.

6. Verkaufstisch (110) nach einem der Ansprüche 1 bis 5, **dadurch gekennzeichnet, dass** die Gelenkstangen (126a, 126b) an direkt gegenüberliegenden Ecken der Längsseitenwände (112) jeweils gelenkig angeordnet sind.

7. Verkaufstisch (110) nach einem der Ansprüche 1 bis 6, **dadurch gekennzeichnet, dass** wenigstens eine der Gelenkstangen (126a, 126b) mittig an einer der Längsseitenwände (112) gelenkig angeordnet ist.

8. Verkaufstisch (110) nach einem der Ansprüche 1 bis 7, **dadurch gekennzeichnet, dass** die Gelenkstangen (126a, 126b) an den Querseitenwänden (114) jeweils gelenkig angeordnet sind.

9. Verkaufstisch (110) nach einem der Ansprüche 1 bis 8, **dadurch gekennzeichnet, dass** die Gelenkstangen (126a, 126b) die gleiche Länge aufweisen.

10. Verkaufstisch (110) nach einem der Ansprüche 1 bis 9, **dadurch gekennzeichnet, dass** die Gelenkstangen (126a, 126b) zumindest teilweise aus Halbzeugen, insbesondere aus einem Vierkantrohr oder einem Rechteckrohr oder einem Rundrohr ausgebildet sind.

11. Verkaufstisch (110) nach einem der Ansprüche 1 bis 10, **dadurch gekennzeichnet, dass** die Gelenkstangen (126a, 126b) im aufgestellten und montierten Zustand des Verkaufstisches (110) einen mechanischen Nullstab darstellen.

12. Verkaufstisch (110) nach einem der Ansprüche 1 bis 11, **dadurch gekennzeichnet, dass** die Gelenkstangen (126a, 126b) im zusammengeklappten Zustand des Verkaufstischs (110) übereinander im Gabelprofil (130) angeordnet und gesichert sind.

13. Verkaufstisch (110) nach einem der Ansprüche 1 bis 12, **dadurch gekennzeichnet, dass** wenigstens zwei Gabelprofile (130) vorgesehen sind.

14. Verkaufstisch (110) nach Anspruch 13, **dadurch gekennzeichnet, dass** die wenigstens zwei Gabelprofile (130) jeweils versetzt zueinander angeordnet sind.

15. Verkaufstisch (110) nach Anspruch 13, **dadurch gekennzeichnet, dass** die wenigstens zwei Gabelprofile (130) auf derselben oder unterschiedlichen Höhe bezogen auf die Position am Grundrahmen (112a, 114a) und/oder einer Längsseitenwand (112) und/oder einer Querseitenwand (114) versetzt zueinander angeordnet sind.
